# EUROPÄISCHE PATENTSCHRIFT

(11) **EP 0 552 649 B1**
(45) Veröffentlichungstag und Bekanntmachung des Hinweises auf die Patenterteilung: **29.03.1995**
(21) Anmeldenummer: 93100368.5
(22) Anmeldetag: 13.01.1993
(51) Int. Cl.: B60T 7/12, B60K 41/20

(54) **Parkbremssteuersystem**
Parking brake control system
Système de contrôle de frein de blocage

(30) Priorität: 21.01.1992 US 822766
(43) Veröffentlichungstag der Anmeldung: 28.07.1993
(73) Patentinhaber: DEERE & COMPANY, Moline, Illinois 61265 (US)
(72) Erfinder: Johnson, Douglas Rene, Waterloo, Iowa 50701 (US)
(74) Vertreter: Feldmann, Bernhard

(56) Entgegenhaltungen:
- WO-A-89/01887
- US-A- 3 593 815
- US-A- 3 831 703
- US-A- 3 937 295
- US-A- 3 999 075
- US-A- 4 245 724
- US-A- 4 543 786
- US-A- 4 561 527
- US-A- 4 635 767
- US-A- 4 749 236

## Beschreibung

Die Erfindung betrifft ein Parkbremssteuersystem für ein Fahrzeug mit einem Parkbremsorgan, das mit einer Druckkammer in Verbindung steht und sich bei Druckbeaufschlagung gegen die Kraft einer Feder aus seiner Bremsstellung lösen läßt. Durch ein Parkbremsventil läßt sich wahlweise eine von der Fahrzeugantriebsmaschine angetriebene Hauptpumpe oder ein Reservoir an eine zur Druckkammer führende Verbindungsleitung anschließen. Es ist ferner eine zusätzliche Druckquelle vorgesehen, die durch Ventilmittel wahlweise mit der Druckkammer verbindbar ist, um bei abgestellter Fahrzeugantriebsmaschine ein Lösen der Parkbremse zu ermöglichen.

Es ist bekannt, ein Fahrzeug mit einer federbelasteten Parkbremse zu versehen, die sich durch Anwendung eines Hydraulikdrucks lösen läßt und unabhängig von der Betriebsbremse ist. Eine derartige Parkbremse kann in eine Komponente des Antriebsstranges eingreifen, um eine Bewegung des Fahrzeugs zu verhindern, ohne daß die Antriebsmaschine abgestellt wurde. Solch eine Parkbremse wird zweckmäßigerweise immer dann automatisch wirksam, wenn die Antriebsmaschine abgestellt wird. Tritt jedoch ein Maschinenschaden oder eine andere Störung am Fahrzeug auf, müssen Vorkehrungen getroffen sein, damit sich die Parksperre lösen läßt und das Fahrzeug an einen Ort geschoben oder geschleppt werden kann, an dem sich die erforderlichen Reparaturen durchführen lassen.

Aus der US-A-3,999,075 geht beispielsweise ein Parkbremssystem hervor, das eine Kombination aus einem Luft- und einem Hydraulikkreis enthält. Die Parkbremsen werden gewöhnlich durch Flüssigkeitsdruck gelöst, der durch eine von der Antriebsmaschine angetriebene Pumpe geliefert wird. Fällt der Druck unter einen bestimmten Wert, so ermöglicht ein von einem Akkumulator bereitgestellter Pneumatikdruck eine normale Bremsbetätigung. Tritt eine mechanische Störung auf, so leitet ein Parkbremsventil Luftdruck von dem Akkumulator zu einem Hauptzylinder, der seinerseits unter Druck stehende Hydraulikflüssigkeit an die Bremsen liefert, um diese zu lösen. Dieses Parkbremssystem erfordert jedoch umfangreiche Hydraulik- und Pneumatikkreise.

Die US-A-4,245,724 offenbart einen vollständig mechanisch ausgebildeten Parkbremsmechanismus mit Übersteuerung. Dieser Mechanismus enthält eine Schraube, die durch eine Öffnung in ein äußeres Gehäuse der Bremse eingesetzt ist, um in eine Gewindebohrung einzugreifen, die in ein an dem Bremskolben befestigtes Teil eingelassen ist. Durch Drehung der Schraube wird der federvorgespannte Kolben aus seiner Einrücklage gezogen, so daß er die Bremsscheiben freigibt. Dieser Parkbremsmechanismus erfordert jedoch einen Zugang zu der Parkbremse, sofern diese gelöst werden soll. Dies ist unbequem, da die Parkbremse sich häufig an einem schlecht zugänglichen Ort befindet. Ferner sind Spezialwerkzeuge erforderlich, um die Schraube einzusetzen oder zu entfernen. Derartige Werkzeuge können jedoch im Bedarfsfall nicht griffbereit sein.

Einige Breitspurschlepper weisen eine Parkbremse mit einer Bremsklinke auf, die mit einem Schalthebel in der Fahrzeugkabine gekoppelt ist. Befindet sich der Schalthebel in seiner Parkposition, so greifen Zähne der Bremsklinke in ein Untersetzungszahnrad des Getriebes ein und blockieren damit den Antriebsstrang, wodurch eine Bewegung des Fahrzeugs unterbunden wird. Derartige Parkbremsen erfordern jedoch ein mechanisches Gestänge zwischen dem Schalthebel und der Bremsklinke. Bei Verwendung eines elektronisch gesteuerten Getriebes wäre eine Parkbremse wünschenswert, die kein mechanisches Gestänge erfordert. Ist beispielsweise eine elektronische Umschaltsteuerung auf der Armlehne eines verkippbaren Fahrzeugsitzes befestigt, so wäre es nicht möglich, hier auch ein mechanisches Gestänge zur Beeinflussung der Parkbremse zu befestigen.

Aus der US-A-4,749,236 geht ein mechanisch ein- und hydraulisch ausrückbares Bremssystem hervor, das die Parkfunktionen der eingangs genannten Art aufweist. Durch ein mechanisch oder elektrisch betätigbares Zweiwege-Umschaltventil läßt sich die Bremse wahlweise mit einer durch den Motor angetriebenen Pumpe (Parkbremse ist ausgerückt) oder einem Reservoir (Parkbremse ist eingerückt) verbinden. Ferner ist ein Druckspeicher vorgesehen, der im Bedarfsfall über ein Absperrventil an die Bremse anschließbar ist, um diese zu lösen. Damit läßt sich auch bei stehender Antriebsmaschine die Parkbremse lösen und das Fahrzeug bewegen. Diese bekannte Lösung ist durch die Verwendung eines Druckreservoirs noch relativ aufwendig. Sie läßt auch Wünsche hinsichtlich einer zuverlässigen Funktionsweise offen, da beispielsweise durch eine Fehlbedienung des Zweiwege-Umschaltventils oder bei einer Fahrzeugstörung der Druckspeicher entleert werden kann und dann nicht mehr seine Aufgabe erfüllt.

Die der Erfindung zugrunde liegende Aufgabe wird darin gesehen, ein Parkbremssteuersystem der eingangs genannten Art anzugeben, durch das sich die genannten Probleme überwinden lassen. Insbesondere soll ein Parkbremssteuersystem geschaffen werden, das für den Einsatz bei einem elektronisch gesteuerten Getriebe geeignet ist, das automatisch die Parkbremse einrückt, wenn die Antriebsmaschine abgestellt wird und das Fahrzeug steht, das Einrichtungen enthält, die das Lösen der Parkbremse ermöglicht, so das sich das Fahrzeug bei Störungen auch ohne eigene Antriebskraft verfahren läßt, das kein mechanisches Betätigungsgestänge erfordert, das ein unbeabsichtigtes Einrücken der Parkbremse durch Fehlbedienungen oder bei Betriebsstörungen weitgehend vermeidet und bei dem zur Bedienung keine großen manuellen Kräfte erforderlich sind.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Eine bevorzugte Ausgestaltung der Erfindung wird in einem Parkbremssteuersystem für eine durch Federkraft einrückbare und durch Hydraulikdruck lösbare Parkbremse gesehen, die ein elektromagnetisch betätigbares Parkbremsventil, ein hydraulisch gesteuertes Fahrtzustandsventil und ein manuell einstellbares Schleppventil aufweist, durch die der Flüssigkeitsaustausch zwischen einer Druckkammer der Parkbremse, einer durch die Fahrzeugantriebsmaschine angetriebenen Hydraulikpumpe, einem Vorratsbehälter und einer manuell betätigbaren Hilfspumpe gesteuert wird. Das elektromagnetische Parkbremsventil wird vorzugsweise in Abhängigkeit der Einstellung des Getriebewahlhebels in der Fahrzeugkabine gesteuert. Normalerweise ist die Magnetspule des Parkbremssteuerventils erregt und gibt die Verbindung zwischen der Hydraulikpumpe und der Druckkammer frei, so daß die Druckkammer unter Druck steht und sich die Parkbremse löst. Wenn der Getriebewahlhebel in seine Parkposition gebracht wird, wird der Magnetspulenstrom unterbrochen und das Parkbremssteuerventil verbindet die Druckkammer mit dem Vorratsbehälter, so daß die Druckkammer druckentlastet wird und die Parkbremse einrückt. Wenn das Fahrzeug abgestellt wird und die Antriebsmaschine nicht mehr läuft, wird der Magnetspulenstrom automatisch unterbrochen, die Hydraulikpumpe liefert keinen Druck mehr und die Parkbremse wird durch Federkraft eingerückt. In dieser Situation kann das manuell betätigbare Schleppventil betätigt werden, um die Verbindung zwischen der Druckkammer und dem Vorratsbehälter zu unterbrechen, so daß die Druckkammer sich durch die von der Bedienungsperson betätigbare Hilfspumpe unter Druck setzen läßt.

Um das Betätigungsorgan für die Hilfspumpe einzusparen, kann vorzugsweise das Kupplungspedal ausgenutzt werden, das wirkungsmäßig so mit dem Kolben der Hilfspumpe verbunden wird, daß bei wiederholtem Herunterdrücken des Kupplungspedals die Hilfspumpe einen Hilfspumpendruck aufbaut, der zur Lösung der Parkbremse verwendet werden kann. Ein erstes und ein zweites Rückschlagventil erlauben lediglich einen Durchfluß in eine Richtung von dem Vorratsbehälter zu der Hilfspumpe und weiter zur Druckkammer.

Um zu verhindern, daß die Parkbremse versehentlich oder infolge einer Störung des Fahrzeugs bei erhöhten Fahrzeuggeschwindigkeiten eingerückt wird, ist vorzugsweise ein Fahrtzustandsventil vorgesehen, das durch eine Einrichtung zur Erfassung der Fahrzeugbewegung beeinflußbar ist und die Verbindung zwischen Druckkammer und Reservoir sperrt, sofern die Fahrzeuggeschwindigkeit einen bestimmten Wert überschreitet. Zweckmäßigerweise läßt sich die Fahrzeugbewegung durch eine direkt durch die Bodenräder angetriebene Pumpe erfassen, die bei Überschreiten einer bestimmten Fahrtgeschwindigkeit einen ausreichenden Steuerdruck an das Fahrtzustandsventil liefert, um dieses gegen die Kraft einer Feder zu schließen und die Verbindung zwischen der Druckkammer und dem Vorratsbehälter zu unterbrechen.

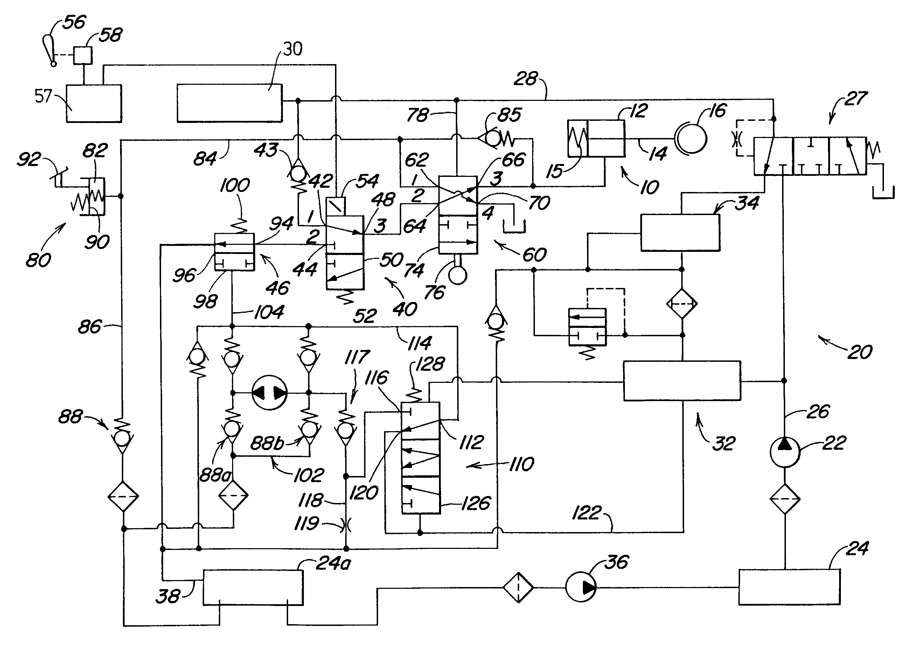

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Aus der einzigen Figur geht eine Parkbremse 10 hervor, die eine Druckkammer 12 enthält, in der sich ein federvorgespannter Kolben bewegt. Der Kolben wirkt auf ein Betätigungsorgan 14, welches in eine Verzahnung der Ausgangswelle 16 des nicht näher dargestellten Fahrzeuges eingreift und deren Drehung verhindert, sofern die Kraft der Feder 15 größer ist als die durch den Druck in der Druckkammer 12 erzeugte Kraft. Ein elektrohydraulisches Parkbremssteuersystem 20 steuert den Betrieb der Parkbremse 10, indem es den Druck in der Druckkammer 12 beeinflußt.

Das Parkbremssteuersystem 20 enthält eine durch den Fahrzeugmotor angetriebene Pumpe 22, die über eine Leitung 26 Flüssigkeit aus einem Vorratsbehälter oder Sumpf 24 zu einem Lenk- und Bremskreis 32 des Fahrzeugs, zum Schmierkreis 34, zu einem Druckregulierventil 27 und zu einer Leitung 28 pumpt. Eine Ansaugpumpe 36 pumpt Flüssigkeit aus einer Sumpfleitung 38 und einen Sumpf 24a, in dem sich Flüssigkeit von verschiedenen Quellen sammelt, zu dem Vorratsbehälter 24. Damit wird der von der Pumpe 22 gelieferte und sich zu dem Lenk- und Bremskreis 32 sowie dem Schmierkreis 34 verzweigende Systemdruck dem Druckregulierventil 27, der Leitung 28 und weiteren Funktionen 30 mitgeteilt.

Ein Parkbremssteuerventil 40 weist ein Gehäuse auf. Dieses hat eine Eintrittsöffnung 42, die über ein Rückschlagventil 43 mit der Leitung 28 verbunden ist, eine Öffnung 44, die über ein Fahrtzustandsventil 46 mit der Sumpfleitung 38 verbunden ist, sofern das Fahrzeug still steht, und eine Öffnung 48. Das Parkbremssteuerventil 40 enthält ferner ein Parkbremsventilteil 50, das beweglich zwischen einer ersten (dargestellten) Lage, in der die Eintrittsöffnung 42 mit der Öffnung 48 verbunden und die Öffnung 44 gesperrt ist, und einer zweiten Lage, in der die Eintrittsöffnung 42 gesperrt ist und die Öffnung 44 mit der Öffnung 48 in Verbindung steht. Bei Erregung hält eine elektromagnetische Spule 54 das Parkbremsventilteil 50 in seiner ersten Lage. Eine vorgespannte Feder 52 bewegt das Parkbremsventilteil 50 in seine zweite Lage, wenn die Spule 54 nicht erregt ist. Die Spule 54 steht wirkungsmäßig mit einem Gangschalthebel 56 derart in Verbindung, daß die Spule 54 erregt wird, wenn der Gangschalthebel 56 sich nicht in der "Parkposition" befindet.

Wird die Erfindung beispielsweise in Verbindung mit einem nicht dargestellten Getriebe verwendet, welches durch eine mikroprozessor-unterstützte elektronische Steuereinheit 57 gesteuert wird, so stellt ein Schalter 58 oder ein Umsetzer fest, wenn der Gangschalthebel 56 sich nicht in seiner Parkposition befindet und liefert ein entsprechendes Signal an die elektronische Steuereinheit 57, welche ihrerseits die elektromagnetische Spule 54 über einen üblichen, nicht dargestellten Ventiltreiberkreis erregt.

Ein Schleppventil 60 weist in seinem Gehäuse eine erste Eintrittsöffnung 62, eine zweite Eintrittsöffnung 64, die mit der Öffnung 48 des Parkbremssteuerventils 40 verbunden ist, eine erste Austrittsöffnung 66, die mit der Druckkammer 12 verbunden ist, und eine zweite Austrittsöffnung 70, an der der Druck des Sumpfs ansteht, auf. Ferner enthält das Schleppventil 60 ein Schleppventilteil 74, das sich zwischen einer ersten, dargestellten und einer zweiten Lage verschieben läßt. In der ersten Lage ist die erste Eintrittsöffnung 62 mit der zweiten Austrittsöffnung 70 sowie die zweite Eintrittsöffnung 64 mit der ersten Austrittsöffnung 66 verbunden. In der zweiten Lage sind die erste Eintrittsöffnung 62 und die zweite Austrittsöffnung 66 gesperrt und die zweite Eintrittsöffnung 64 mit der zweiten Austrittsöffnung 70 verbunden. Das Schleppventil 60 steht mit einem Betätigungsglied 76 in Verbindung, durch das sich das Schleppventil 60 manuell in eine seiner beiden Lagen verschieben läßt. Über eine Pilotleitung 78 wirkt der Flüssigkeitsdruck der Leitung 28 auf das Schleppventilteil 74, um dieses in seine erste Lage zu verschieben und in dieser Lage zu halten, sofern Pumpendruck ansteht.

Eine Handpumpe 80 enthält eine Kammer 82 mit verstellbarem Volumen. Die Kammer 82 steht über die Leitung 84 mit der ersten Eintrittsöffnung 62 des Schleppventils 60 sowie über das Rückschlagventil 85 mit der Druckkammer 12 in Verbindung. Sie ist ferner über die Leitung 86 und das Rückschlagventil 88 mit dem Sumpf 24a verbunden. Die Handpumpe 80 enthält ferner einen Kolben 90, der an ein durch eine Bedienungsperson einstellbares Bedienungsorgan 92 gekoppelt ist. Bei dem Bedienungsorgan 92 kann es sich beispielsweise um ein vorhandenes Pedal, beispielsweise um das durch den Fuß betätigbare Fahrzeugkupplungspedal handeln.

Ein Fahrtzustandsventil 46 des Parkbremssteuersystems 20 weist ein Gehäuse mit einer Eintrittsöffnung 94, die mit der Öffnung 44 des Parkbremssteuerventils 40 in Verbindung steht, und eine Austrittsöffnung 96, die mit der Sumpfleitung 38 verbunden ist, auf. Damit liegt das Fahrtzustandsventil 46 in Serie mit den Ventilen 40 und 60 in der Leitung, die die Druckkammer 12 mit dem Sumpf 24a verbindet. Das Fahrtzustandsventil 46 enthält ferner ein Ventilteil 98, das sich zwischen zwei Lagen verschieben läßt. In der ersten Lage wird die Eintrittsöffnung 94 mit der Austrittsöffnung 96 verbunden, während in der zweiten Lage beide Öffnungen 94, 96 gesperrt werden. Das Ventilteil 98 wird durch eine Feder 100 in seine Grundstellung gedrängt, in der es seine erste Lage einnimmt.

Eine konventionelle vom Boden her angetriebene Pumpen/Rückschlag-Ventilanordnung 102 empfängt über die Rückschlagventile 88a oder 88b Flüssigkeit aus dem Sumpf 24a und liefert Flüssigkeit an die Pilotleitung 104, welche mit dem Ventilteil 98 derart verbunden ist, daß der Druck in der Pilotleitung 104 das Ventilteil 98 gegen die Kraft der Feder 100 in seine zweite Lage drängt.

Die Handpumpe 80 und die Pumpe 102 ziehen ihre Flüssigkeit aus einer tiefer liegenden Ansaugstelle des Sumpfes 24a als die Ansaugpumpe 36. Hierdurch wird sichergestellt, daß die Ansaugpumpe 36 den Sumpf 24a nicht trockenfährt und die Handpumpe 80 sowie die Pumpe 102 betriebsunfähig werden.

Das Gehäuse eines Reservepumpventils 110 enthält eine Eintrittsöffnung 112, welche über die Leitung 114 Flüssigkeit von der Pumpe 102 erhält, eine Öffnung 116, die über das Rückschlagventil 117 mit der Pumpenanordnung 102 und über die Leitung 118 und die Drosselstelle 119 mit der Sumpfleitung 38 verbunden ist, sowie eine Öffnung 120, die über die Pilotleitung 122 mit dem Lenk- und Bremskreis 32 verbunden ist. Das Reservepumpventil 110 enthält ferner ein Ventilteil 126, das zwischen drei Lagen verschiebbar ist. In einer ersten, dargestellten Lage wird die Eintrittsöffnung 112 mit der Öffnung 120 verbunden, während die Öffnung 116 gesperrt ist. In einer zweiten Lage wird die Eintrittsöffnung 112 mit beiden Öffnungen 116 und 120 verbunden, und in einer dritten Lage wird die Eintrittsöffnung 112 nur mit der Öffnung 116 verbunden, während die Öffnung 120 gesperrt ist. Das Ventilteil 126 wird durch eine Feder 128 in seine erste Lage gedrängt. Über die Pilotleitung 122 wird Flüssigkeitsdruck von dem Lenk- und Bremskreis 32 auf das Ventilteil 126 geleitet. Dieser Flüssigkeitsdruck drängt das Ventilteil 126 gegen die Kraft der Feder 128 in Richtung seiner zweiten und dritten Lage.

Während des Hilfslenkmodus, bei dem sich das Ventilteil 126 in seiner ersten Lage befindet, wird der Flüssigkeitsstrom von der von den Bodenrädern her angetriebenen Pumpe 102 auf den Lenk- und Bremskreis 32 geleitet und kehrt über den Getriebeschmierkreis in den Sumpf 24a zurück. Hierdurch bildet sich ein geschlossener Kreislauf aus, so daß der Sumpf 24a nicht durch die vom Boden her angetriebene Pumpe 102 trocken gefahren wird.

### Betriebsweise:

Befindet sich das Parkbremssteuersystem 20 in dem in der Figur dargestellten Zustand, so ist die Spule 54 erregt, so daß über das Rückschlagventil 43, das Parkbremssteuerventil 40 und das Schleppventil 60 Druckflüssigkeit von der Pumpe 22 an die Druckkammer 12 geleitet wird, welche die Parkbremse 10 löst. Ist jedoch das nicht näher dargestellte Fahrzeug abgeschaltet und bewegt es sich nicht, dann ist die Spule 54 nicht erregt, so daß sich das Parkbremssteuerventil 40 in seine zweite Lage bewegt, der Druck in der Druckkammer 12 in die Sumpfleitung 38 abgebaut wird und die Parkbremse 10 eingreift. Dies ist selbst dann der Fall, wenn die Bedienungsperson es vergißt oder unterläßt, den Gangschalthebel 56 in seine Parkposition zu bringen.

Befindet sich der Gangschalthebel 56 in seiner Parkposition und steht das Fahrzeug oder fährt es mit einer Geschwindigkeit, die unterhalb einer vorbestimmten Geschwindigkeit liegt, so wird infolge der Schaltstellung des Schalters 58 die Spule 54 von der elektrischen Versorgung getrennt, so daß das Parkbremssteuerventil 40 durch seine Feder 52 in seine zweite Lage geschoben wird. Dadurch wird die Druckkammer 12 über die Ventile 60, 40 und 46 mit der Sumpfleitung 38 verbunden, so daß durch die Kraft der Feder 15, die Parksperre eingerückt wird. Um die Parksperre einzurücken, braucht daher lediglich der Gangschalthebel 56 in seine Parkposition gebracht zu werden.

Das Einlaßrückschlagventil 43 stellt sicher, daß bei einem Ausfall der Pumpe 22 die Druckkammer 12 nicht über die Ventile 60 und 40 und die Leitung 28 in den Sumpf 24 entleert wird.

Das Fahrtzustandsventil 46 verhindert, daß die Parkbremse 10 eingreift, wenn sich das Fahrzeug bewegt. Immer wenn das Fahrzeug fährt, liefert die vom Boden her angetriebene Pumpe 102 einen Flüssigkeitsstrom an die Leitung 114. Die geförderte Flüssigkeitsmenge hängt von der Fahrzeuggeschwindigkeit ab. Bei normalem Betrieb strömt die Flüssigkeit durch die Eintrittsöffnung 112 und die Öffnung 120 des Reservepumpventils 110 und gelangt über das Rückschlagventil 117 wieder zurück zur Pumpe 102 bzw. durch die Drosselstelle 119 in die Sumpfleitung 38. Durch die Drosselstelle 119 und das Rückschlagventil 117 wird ein Druck in den Leitungen 114 und 104 aufgebaut. Durch diesen Druck wird das Ventilteil 98 gegen die Kraft der Feder 100 in seine zweite Lage gedrückt, in der die Öffnungen 94, 96 verschlossen sind, so daß ein Flüssigkeitsabfluß von der Druckkammer 12 über die Ventile 60 und 40 zu der Sumpfleitung 38 verhindert wird. Die Bemessung der Drosselstelle 119 und der Pumpe 102 legt die maximale Geschwindigkeit fest, bei der die Parkbremse 10 noch einrückbar ist.

Soll die Parkbremse 10 gelöst werden, während die durch den Fahrzeugmotor angetriebene Pumpe 22 nicht arbeitet (beispielsweise wenn das Fahrzeug abgeschleppt wird), läßt sich dies dadurch erreichen, daß das Schleppventil 60 manuell in seine zweite Lage gebracht wird. Hierdurch wird die Verbindung zwischen Sumpf 24a und Druckkammer 12 unterbrochen und die Druckkammer 12 dem Druck der Handpumpe 80 ausgesetzt. Durch Betätigung des Pedals 92 wird der Kolben 90 der Handpumpe 80 bewegt und fördert Flüssigkeit aus dem Sumpf 24a über das Rückschlagventil 88, die Leitungen 86 und 84 und das Rückschlagventil 85 in die Druckkammer 12. Ein Druckabbau über das Schleppventil 60 zum Sumpf 24a ist nicht möglich, da dessen erste Austrittsöffnung 66 gesperrt ist. In diesem Fall kann die Parkbremse 10 nur wieder eingelegt werden, indem das Schleppventil 60 manuell in seine erste Lage verschoben wird. Hierdurch wird die Druckkammer 12 wirkungsmäßig von der Handpumpe 80 getrennt und über die Ventile 60, 40 und 46 mit der Sumpfleitung 38 verbunden, so daß die Druckkammer 12 druckentlastet wird. Sollte die Bedienungsperson es versäumen, das Schleppventilteil 74 in seine erste Lage zu verschieben, um die Parkbremse 10 wieder einzurücken, so wird die Parkbremse 10 automatisch eingerückt, sobald der Fahrzeugmotor angelassen wird. Hierbei wird der Flüssigkeitsdruck von der Pumpe 22 durch die Leitungen 26, 28 und 78 und das Druckregulierventil 27 auf das Schleppventilteil 74 geleitet und bringt das Schleppventilteil 74 zurück in seine erste Lage, in der die Flüssigkeit aus der Druckkammer 12 über die Ventile 60, 40 und 46 in die Sumpfleitung 38 abgelassen wird.

## Patentansprüche

1. Parkbremssteuersystem für ein Fahrzeug mit einem Parkbremsorgan (14), das mit einer Druckkammer (12) in Verbindung steht und sich bei Druckbeaufschlagung gegen die Kraft einer Feder (15) aus seiner Bremsstellung lösen läßt, ferner mit einer durch die Fahrzeugantriebsmaschine antreibbaren Hauptpumpe (22), einem Reservoir (24) und einem Parkbremssteuerventil (40), durch das eine zur Druckkammer (12) führende Verbindungsleitung wahlweise mit der Hauptpumpe (22) oder dem Reservoir (24) verbindbar ist, und ferner mit einer zusätzlichen Druckquelle, die durch Ventilmittel wahlweise mit der Druckkammer (12) verbindbar ist, um bei abgestellter Fahrzeugantriebsmaschine ein Lösen der Parkbremse (10) zu ermöglichen, dadurch gekennzeichnet, daß als zusätzliche Druckquelle eine durch die Bedienungsperson antreibbare Hilfspumpe (80) vorgesehen ist, die durch die Ventilmittel (60, 85) mit der Druckkammer (12) verbindbar ist, und daß die Ventilmittel ein betätigbares Schleppventil (60) enthalten, welches wahlweise die Druckmittelzufuhr von der Hilfspumpe (80) zur Druckkammer (12) ermöglicht oder verhindert, und gleichzeitig die Verbindung zwischen der Druckkammer (12) und der Hauptpumpe (22) steuert.

2. Parkbremssteuersystem nach Anspruch 1, dadurch gekennzeichnet, daß die Ventilmittel ein Rückschlagventil (85), das zwischen der Hilfspumpe (80) und der Druckkammer (12) angeordnet ist und lediglich einen Durchfluß von der Hilfspumpe (80) zur Druckkammer (12) ermöglicht, und das Schleppventil (60) enthalten, das zwischen einer ersten Position, in der einerseits die Druckkammer (12) mit dem Parkbremssteuerventil (40) und andererseits die Hilfspumpe (80) mit dem Reservoir (24) verbunden sind, und einer zweiten Position, in der das Parkbremssteuerventil (40) mit dem Reservoir (24) verbunden ist und die Verbindung zur Druckkammer (12) blockiert ist, umschaltbar ist.

3. Parkbremssteuersystem nach Anspruch 1 oder 2, dadurch gekennzeichnet, daß die Hilfspumpe (80) einen verschiebbaren Kolben (90) enthält, der wirkungsmäßig mit dem Kupplungspedal (92) des Fahrzeugs in Verbindung steht.

4. Parkbremssteuersystem nach einem der Ansprüche 1 bis 3, dadurch gekennzeichnet, daß eine Kolbenkammer (82) der Hilfspumpe (80) über ein erstes Rückschlagventil (88), das lediglich einen Durchfluß zur Kolbenkammer (82) erlaubt, mit dem Reservoir (24a) verbunden ist und daß die Kolbenkammer (82) über ein zweites Rückschlagventil (85), das lediglich einen Abfluß von der Kolbenkammer (82) erlaubt, mit der Druckkammer (12) in Verbindung steht.

5. Parkbremssteuersystem nach einem der Ansprüche 1 bis 4, dadurch gekennzeichnet, daß ein Fahrtzustandsventil (46) vorgesehen ist, das durch eine Einrichtung zur Erfassung der Fahrzeugbewegung beeinflußbar ist und jede Verbindung zwischen Druckkammer (12) und Reservoir (24) sperrt, sofern die Fahrzeuggeschwindigkeit einen bestimmten Wert überschreitet.

6. Parkbremssteuersystem nach Anspruch 5, dadurch gekennzeichnet, daß eine über die Bodenräder des Fahrzeugs antreibbare Pumpe (102) vorgesehen ist, die bei Überschreiten einer bestimmten Fahrtgeschwindigkeit einen ausreichenden Steuerdruck an das Fahrtzustandsventil (46) liefert, um dieses gegen die Kraft einer Feder (100) zu schließen.

7. Parkbremssteuersystem nach einem der Ansprüche 1 bis 6, dadurch gekennzeichnet, daß das Schleppventil (60) in der Verbindungsleitung zwischen der Druckkammer (12) und dem Parkbremssteuerventil (40) angeordnet ist und ein Gehäuse mit wenigstens vier Öffnungen aufweist, von denen die erste Öffnung (62) mit der Hilfspumpe (80), die zweite Öffnung (64) mit einem Anschluß des Parkbremssteuerventils (40), die dritte Öffnung (66) mit der Druckkammer (12) und die vierte Öffnung (70) mit dem Reservoir (24) verbunden sind, daß ein Schleppventilteil (74) vorgesehen ist, das in einer ersten Lage die erste Öffnung (62) mit der vierten Öffnung (70) sowie die zweite Öffnung (64) mit der dritten Öffnung (66) verbindet und in einer zweiten Lage die erste Öffnung (62) und die dritte Öffnung (66) blockiert und die zweite Öffnung (64) mit der vierten Öffnung (70) verbindet, und daß die Lage des Schleppventilteils (74) durch ein Betätigungsglied (76) manuell einstellbar ist.

8. Parkbremssteuersystem nach Anspruch 7, dadurch gekennzeichnet, daß das Schleppventilteil (74) durch den Druck der Hauptpumpe (22) in seine erste Lage gedrängt wird und sich durch ein Betätigungsglied (76) gegen diesen Druck manuell in seine zweite Lage verschieben läßt.

9. Parkbremssteuersystem nach einem der Ansprüche 1 bis 8, dadurch gekennzeichnet, daß das Parkbremsseuerventil (40) in Abhängigkeit von der Getriebestellung elektrisch ansteuerbar ist.

10. Parkbremssteuersystem nach einem der Ansprüche 1 bis 9, dadurch gekennzeichnet, daß das Parkbremssteuerventil (40) ein Parkbremsventilteil (50) enthält, welches durch eine Feder (52) in eine erste Lage gedrängt wird, in der es die Verbindungsleitung mit dem Reservoir (24) verbindet, und durch Erregen einer Magnetspule (54) gegen die Kraft der Feder (52) in eine zweite Lage gedrängt wird, in der es die Verbindungsleitung mit der Hauptpumpe (22) verbindet.

11. Parkbremssteuersystem nach einem der Ansprüche 1 bis 10, dadurch gekennzeichnet, daß das Parkbremssteuerventil (40) ein Gehäuse mit wenigstens drei Öffnungen aufweist, von denen die erste Öffnung (42) mit der Hauptpumpe (22), die zweite Öffnung (44) gegebenenfalls unter Zwischenschaltung eines Fahrtzustandsventils (46) mit dem Reservoir (24) und die dritte Öffnung (48) gegebenenfalls unter Zwischenschaltung des Schleppventils (60) mit der Druckkammer (12) verbunden sind, daß ein Parkbremsventilteil (50) vorgesehen ist, das in einer ersten Lage die erste Öffnung (42) mit der dritten Öffnung (48) verbindet und die zweite Öffnung (44) sperrt und in einer zeiten Lage die erste Öffnung (42) sperrt und die zweite Öffnung (44) mit der dritten Öffnung (48) verbindet, und daß das Parkbremsventilteil (50) durch eine Feder (52) in seine zweite Lage und durch eine Magnetspule (54) gegen die Kraft der Feder (52) in seine erste Lage gedrängt wird.

## Claims

1. A parking brake control system for a vehicle with a parking brake member (14) which is coupled to a pressure chamber (12) and can be released from its braking position by application of pressure against the force of a spring (15), also with a main pump (22) which can be driven by the drive engine of the vehicle, a reservoir (24) and a parking brake control valve (40), through which a connecting line leading to the pressure chamber (12) can be connected selectively to the main pump (22) or the reservoir (24), and also with an additional pressure source which can be connected by valve means selectively to the pressure chamber (12), in order to facilitate release of the parking brake (10) with the vehicle drive engine switched off, characterized in that an auxiliary pump (80) which can be actuated by the operator is provided as the additional pressure source and can be connected to the pressure chamber (12) by the valve means (60, 85), and in that the valve means include an operable tow valve (60) which selectively allows or prevents feed of pressure medium from the auxiliary pump (80) and at the same time controls the connection between the pressure chamber (12) and the main pump (22).

2. A parking brake control system according to claim 1, characterized in that the valve means include a non-return valve (85), which is arranged between the auxiliary pump (80) and the pressure chamber (12) and only allows flow from the auxiliary pump (80) to the pressure chamber (12), and the tow valve (60), which can be changed over between a first position in which on the one hand the pressure chamber (12) is connected to the parking brake control valve (40) and on the other hand the auxiliary pump (80) is connected to the reservoir (24), and a second position, in which the parking brake control valve (40) is connected to the reservoir (24) and the connection to the pressure chamber (12) is blocked.

3. A parking brake control system according to claim 1 or 2, characterized in that the auxiliary pump (80) has a movable piston (90) which is operatively connected to the clutch pedal (92) of the vehicle.

4. A parking brake control system according to any of claims 1 to 3, characterized in that a piston chamber (82) of the auxiliary pump (80) is connected to the reservoir (24a) through a first non-return valve (88) which only allows flow to the piston chamber (82), and in that the piston chamber (82) is connected to the pressure chamber (12) through a second non-return valve (85) which only allows flow out of the piston chamber (82).

5. A parking brake control system according to any of claims 1 to 4, characterized in that there is traveling state valve (46) which can be acted on by a device for detecting vehicle motion and which blocks any connection between the pressure chamber (12) and reservoir (24) when the vehicle speed exceeds a predetermined value.

6. A parking brake control system according to claim 5, characterized in that a pump (102) which can be driven by the ground wheels of the vehicle is provided and provides enough control pressure to the traveling state valve (46) to close this against the force of a spring (100) on exceeding a predetermined speed of travel.

7. A parking brake control system according to any of claims 1 to 6, characterized in that the tow valve (60) is arranged in the connecting line between the pressure chamber (12) and the parking brake control valve (40) and comprises a housing with at least four ports, of which the first port (62) is connected to the auxiliary pump (80), the second port (64) is connected to a union of the parking brake control valve (40), the third port (66) is connected to the pressure chamber (12) and the fourth port (70) is connected to the reservoir (24), in that there is a tow valve part (74) which in a first position connects the first port (62) to the fourth port (70) and the second port (64) to the third port (66) and in a second position blocks the first port (62) and the third port (66) and connects the second port (64) to the fourth port (70), and in that the position of the tow valve part (74) can be set manually by an operating member (76).

8. A parking brake control system according to claim 7, characterized in that the tow valve part (74) is biased into its first position by the pressure of the main pump (22) and can be moved manually against this pressure into its second position.

9. A parking brake control system according to any of claims 1 to 8, characterized in that the parking brake control valve (40) can be controlled electrically in dependence on the gear selection.

10. A parking brake control system according to any of claims 1 to 9, characterized in that the parking brake control valve (40) includes a parking brake valve part (50) which is biased by a spring (52) into a first position in which it connects the connecting line to the reservoir (24) and is urged by excitation of a magnetic coil (54) against the force of the spring (52) into a second position in which it connects the connecting line to the main pump (22).

11. A parking brake control system according to any of claims 1 to 10, characterized in that the parking brake control valve (40) comprises a housing with at least three ports, of which the first port (42) is connected to the main pump (22), the second port (44) is connected to the reservoir (24), if desired with interposition of a traveling state valve (46), and the third port (48) is connected to the pressure chamber (12), if desired with interposition of the tow valve (60), and in that there is a parking brake valve part (50) which in a first position connects the first port (42) to the third port (48) and blocks the second port (44) and in a second position blocks the first port (42) and connects the second port (44) to the third port (48), and in that the parking brake valve part (50) is biased into its second position by a spring (52) and is urged by a magnetic coil (54) against the force of the spring (52) into its first position.

## Revendications

1. Système de commande de frein de stationnement pour un véhicule comportant un organe de frein de stationnement (14), qui est relié à une chambre de pression (12) et peut se dégager de sa position de freinage lors d'une charge en pression, à l'encontre de la force d'un ressort (15), et comportant une pompe principale (22) pouvant être entraînée par le moteur d'entraînement du véhicule, un réservoir (24) et une soupape de commande (40) du frein de stationnement, au moyen de laquelle une canalisation de liaison aboutissant à la chambre de pression (12) peut être reliée au choix à la pompe principale (22) ou au réservoir (24), et comportant en outre une source de pression supplémentaire, qui peut être reliée par des moyens en forme de soupapes au choix à la chambre de pression (12) pour permettre un desserrage du frein de stationnement (10) lorsque le moteur d'entraînement du véhicule est arrêté, caractérisé en ce qu'il est prévu, comme source de pression supplémentaire, une pompe auxiliaire (80) pouvant être entraînée par l'opérateur et qui peut être reliée par les moyens en forme de soupapes (60,85), à la chambre de pression (12), et que les moyens en forme de soupapes contiennent une soupape asservie (60) qui permet ou bloque au choix l'envoi d'un fluide comprimé de la pompe auxiliaire (80) à la chambre de pression (12), et commande simultanément la liaison entre la chambre de pression (12) et la pompe principale (22).

2. Système de commande de frein de stationnement selon la revendication 1, caractérisé en ce que les moyens en forme de soupapes comprennent une soupape antiretour (85), qui est disposée entre la pompe auxiliaire (80) et la chambre de pression (12) et permet uniquement un transfert de la pompe auxiliaire (80) à la chambre de pression (12), et la soupape asservie (60), qui peut être commutée entre une première position, dans laquelle d'une part la chambre de pression (12) est reliée à la soupape de commande (40) du frein de stationnement, et d'autre part la pompe auxiliaire (80) est reliée au réservoir (24), et une seconde position, dans laquelle la soupape de commande (40) du frein de stationnement est reliée au réservoir (22) et la communication avec la chambre de pression (12) est bloquée.

3. Système de commande de frein de stationnement selon la revendication 1 ou 2, caractérisé en ce que la pompe auxiliaire (80) contient un piston mobile (90), qui est relié de façon active à la pédale d'embrayage (92) du véhicule.

4. Système de commande de frein de stationnement selon l'une des revendications 1 à 3, caractérisé en ce qu'une chambre (82) du piston de la pompe auxiliaire (80) est reliée au réservoir (24a) par l'intermédiaire d'une première soupape antiretour (88), qui permet uniquement un transfert en direction de la chambre (82) du piston, et que la chambre (82) du piston est reliée à la chambre de pression (12) par l'intermédiaire d'une seconde soupape antiretour (85), qui permet uniquement une évacuation à partir de la chambre (82) du piston.

5. Système de commande de frein de stationnement suivant l'une des revendications 1 à 4, caractérisé par le fait qu'il est prévu une soupape (46) activée en fonction de l'état de déplacement et qui peut être influencée par un dispositif détectant le déplacement du véhicule et bloque toute communication entre la chambre de pression (12) et le réservoir (24) dans la mesure où la vitesse du véhicule dépasse une valeur déterminée.

6. Système de commande de frein de stationnement selon la revendication 5, caractérisé en ce qu'il est prévu une pompe (102), qui doit être entraînée par l'intermédiaire des roues du véhicule et qui, lors du dépassement d'une vitesse de déplacement prédéterminée, envoie une pression de commande suffisante à la soupape (46) de réglage de l'état de déplacement, pour fermer cette dernière à l'encontre de la force d'un ressort (100).

7. Système de commande de frein de stationnement selon l'une des revendications 1 à 6, caractérisé en ce que la soupape asservie (60) est montée dans la canalisation de liaison entre la chambre de pression (12) et la soupape (40) de commande du frein de stationnement et comporte un boîtier possédant au moins quatre ouvertures, parmi lesquelles la première ouverture (62) est reliée à la pompe auxiliaire (80), la seconde ouverture (64) est reliée à un raccord de la soupape de commande (40) du frein de stationnement, la troisième ouverture (66) est reliée à la chambre de pression (12) et la quatrième ouverture (70) est reliée au réservoir (24), qu'il est prévu une partie formant soupape asservie (74), qui, dans une première position, relie la première ouverture (62) et la quatrième ouverture (70) ainsi que la seconde ouverture (64) et la troisième ouverture (66), et, dans une seconde position, bloque la première ouverture (62) et la troisième ouverture (66) et relie la seconde ouverture (64) à la quatrième ouverture (70), et que la position de la partie formant soupape asservie (74) est réglable manuellement à l'aide d'un organe d'actionnement (76).

8. Système de commande de frein de stationnement selon la revendication 7, caractérisé en ce que la partie formant soupape asservie (74) est repoussée dans sa première position par la pression de la pompe principale (22) et peut être amenée manuellement dans sa seconde position par un organe d'actionnement (76), à l'encontre de cette pression.

9. Système de commande de frein de stationnement selon l'une des revendications 1 à 8, caractérisé en ce que la soupape de commande (40) du frein de stationnement peut être commandée électriquement en fonction de la position de la transmission.

10. Système de commande de frein de stationnement selon l'une des revendications 1 à 9, caractérisé en ce que la soupape de commande (40) du frein de stationnement contient une partie (50), qui est repoussée par un ressort (52) dans une première position, dans laquelle elle met en communication la canalisation de liaison avec le réservoir (24), et est repoussée, sous l'effet de l'excitation d'une bobine magnétique (54), à l'encontre de la force du ressort (52), dans une seconde position, dans laquelle elle met en communication la canalisation de liaison et la pompe principale (22).

11. Système de commande de frein de stationnement selon l'une des revendications 1 à 10, caractérisé en ce que la soupape (40) de commande du frein de stationnement comporte un boîtier possédant au moins trois ouvertures, parmi lesquelles la première ouverture (42) est reliée à la pompe principale (22), la seconde ouverture (44) est reliée au réservoir (24) moyennant éventuellement le montage intercalé d'une soupape (46) activée en fonction de l'état de déplacement, et une troisième ouverture (48) est reliée à la chambre de pression (12), moyennant éventuellement un montage intercalé de la soupape asservie (60), qu'il est prévu une partie (50) de la soupape du frein de stationnement, qui dans une première position, met en communication la première ouverture (42) avec la troisième ouverture (48) et bloque la seconde ouverture (44) et, dans une seconde position, bloque la première ouverture et met en communication la seconde ouverture (44) et la troisième ouverture (48), et que la partie (50) de la soupape du frein de stationnement est repoussée par un ressort (51) dans sa seconde position et par une bobine magnétique (54), à l'encontre de la force du ressort (59), dans sa première position.
